# EUROPÄISCHE PATENTSCHRIFT

(11) **EP 1 848 287 B1**
(45) Veröffentlichungstag und Bekanntmachung des Hinweises auf die Patenterteilung: **25.05.2011**
(21) Anmeldenummer: 05805200.2
(22) Anmeldetag: 03.11.2005
(51) Int. Cl.: A23G 1/20, A23G 3/02, A23G 9/28, A21C 5/00, A22C 7/00

(54) **VORRICHTUNG ZUR VERARBEITUNG EINES VERZEHRGUTES**
DEVICE FOR PROCESSING AN EDIBLE PRODUCT
DISPOSITIF DE TRAITEMENT D'UN PRODUIT D'ALIMENTATION

(30) Priorität: 01.02.2005 DE 102005004785
(43) Veröffentlichungstag der Anmeldung: 31.10.2007
(73) Patentinhaber: Bühler AG, 9240 Uzwil (CH)
(72) Erfinder: STEINER, Uwe, 9244 Niederuzwil (CH); KASEMANN, Karl-Jürgen, 58540 Meinerzhagen (DE); PAUL, Michael, 51702 Bergneustadt (DE)
(74) Vertreter: Wilming, Martin
(86) Internationale Anmeldenummer: PCT/IB2005/053587
(87) Internationale Veröffentlichungsnummer: WO 2006/095220

(56) Entgegenhaltungen:
- EP-A- 0 956 777
- EP-A- 1 196 044
- EP-A- 1 547 469
- WO-A-94/19963
- US-A- 3 605 645
- US-A- 6 161 733

## Beschreibung

Die Erfindung bezieht sich auf eine Vorrichtung zur Verarbeitung eines Verzehrgutes in Form einer viskosen bis pastösen Masse, insbesondere eines Verzehrgutes auf Fettmasse-Basis wie Schokolade oder eines Verzehrgutes auf Wasser-Basis wie Eiskrem, mit einer Dosiereinheit zum dosierten Zuführen eines bestimmten Volumens der Masse zu Formgebungseinheiten.

Die Dosiereinheit enthält eine Kammer mit einer verschliessbaren Einlassöffnung und einer verschliessbaren Auslassöffnung für die zu dosierende Masse sowie einen in die Kammer abgedichtet hineinragenden und innerhalb der Kammer beweglichen Verdrängungskörper, der zwischen einer ersten Stellung, bei der die Auslassöffnung geschlossen und die Einlassöffnung offen ist und das zwischen dem Verdrängungskörper und der Kammer definierte Hohlraum-Volumen seinen grössten Wert hat, und einer zweiten Stellung, bei der die Einlassöffnung geschlossen und die Auslassöffnung offen ist und das zwischen dem Verdrängungskörper und der Kammer definierte Hohlraum-Volumen seinen kleinsten Wert hat, beweglich ist.

Die Einlassöffnung und die Auslassöffnung ist dabei über ein Einlassventil bzw. ein Auslassventil verschliessbar.

Somit wird ein Dosiervolumen bestimmt, bei dem es sich um die Differenz zwischen dem grössten Wert und dem kleinsten Wert des Hohlraum-Volumens handelt, das zwischen dem Verdrängungskörper und der Kammer gebildet ist.

Der Antrieb der Verdrängungskörper und Ventile erfolgt bei den bekannten Vorrichtungen der eingangs genannten Bauart mittels hydraulischer oder pneumatischer Einrichtungen.

Eine derartige Vorrichtung ist z.B. aus der US 6 161 733 oder aus der EP 1 196 044 bekannt.

Die bekannten Vorrichtungen der eingangs beschriebenen Bauart werden für die Verarbeitung eines Lebensmittels verwendet.

Der Einsatz hydraulischer Antriebe bei der Verarbeitung von Lebensmitteln ist jedoch nicht ganz unbedenklich, da die für die Lebensmittelverarbeitung notwendige Hygiene nicht ohne weiteres gewährleistet werden kann. So kann z.B. eine Kontamination des Lebensmittels während seiner Verarbeitung erfolgen, wenn Hydrauliköl aus Leckagen austritt oder eine Hydraulikleiturig platzt.

Der Einsatz pneumatischer Antriebe hat den Nachteil, dass sie eine geringe Steifigkeit aufweisen, was zu Mängeln bei der Dosiergenauigkeit führt.

Der Erfindung liegt daher die Aufgabe zugrunde, eine Vorrichtung der eingangs genannten Bauart bereitzustellen, bei der man den Nachteil der mangelnden Hygiene bei Hydraulikantrieben oder den Nachteil der geringen Steifigkeit bei Pneumatikantrieben für die Dosierung überwindet.

Diese Aufgabe wird gemäss Anspruch 1 dadurch gelöst, dass bei der eingangs beschriebenen Vorrichtung die das Dosiervolumen bestimmende Bewegung des Verdrängungskörpers über einen vorzugsweise elektromechanischen Servo-Antrieb erfolgt und das Schliessen und Öffnen des Einlassventils und des Auslassventils jeweils über einen Pneumatik-Antrieb erfolgt, wobei das Einlassventil und das Auslassventil jeweils durch einen Teilbereich des Verdrängungskörpers gebildet sind, der in der ersten Stellung nur die Auslassöffnung blockiert und in der zweiten Stellung nur die Einlassöffnung blockiert.

Die erfindungsgemässe Vorrichtung erfüllt somit die Anforderungen an die Hygiene und besitzt die für die Dosiergenauigkeit notwendige Steifigkeit. Die Doppelfunktion des Verdrängungskörpers ermöglicht eine kompakte und eine geringe Anzahl beweglicher Bauteile benötigende Bauart der erfindungsgemässen Vorrichtung.

Vorzugsweise ist der Verdrängungskörper ein Hubkolben, der in der Kammer der Dosiereinheit axial gleitend gelagert ist und mittels des Servo-Antriebes in der Kammer zwischen einer ersten Hubstellung, in der das zwischen dem Hubkolben und der Kam mer definierte Hohlraum-Volumen seinen grössten Wert hat, und einer zweiten Hubstellung, in der das zwischen dem Hubkolben und der Kammer definierte Hohlraum-Volumen seinen kleinsten Wert hat, hin und her bewegbar ist.

Vorzugsweise ist das Einlassventil und das Auslassventil durch einen mit einem Kanal durchsetzten Drehkolben gebildet, der in der Kammer der Dosiereinheit drehbar gelagert und mittels eines Antriebes zwischen einer ersten Drehstellung und einer zweiten Drehstellung hin und her bewegbar ist. Dabei stellt der Kanal in der ersten Drehstellung des Drehkolbens eine Verbindung zwischen dem Hohlraum-Volumen und der Einlassöffnung her. In der zweiten Drehstellung des Drehkolbens stellt der Kanal eine Verbindung zwischen dem Hohlraum-Volumen und der Auslassöffnung her. Ähnlich wie der Hubkolben ist der Drehkolben dadurch in der Kammer zwischen der ersten Drehstellung und der zweiten Drehstellung hin und her bewegbar.

Besonders vorteilhaft ist es, wenn der Verdrängungskörper ein Hub/Dreh-Kolben ist, der in der Kammer axial gleitend und um seine Längsachse drehbar gelagert ist.

Dabei wird die erste Stellung des Hub/Dreh-Kolbens durch eine erste Hubstellung und eine erste Drehstellung gebildet und die zweite Stellung des Hub/Dreh-Kolbens durch eine zweite Hubstellung und eine zweite Drehstellung gebildet.

Zweckmässigerweise erfolgt dabei die axiale Hubbewegung des Hub/Dreh-Kolbens über einen linearen oder einen rotativen Servo-Antrieb und die Drehbewegung des Hub/Dreh-Kolbens über einen linearen oder einen rotativen Pneumatik-Antrieb. Für die Ansteuerung der Drehbewegung reicht ein kostengünstiger Pneumatik-Antrieb aus, der trotz seiner geringen Steifigkeit eine ausreichend genaue Drehbewegung des Hub/Dreh-Kolbens und somit das abwechselnde Freigeben und Blockieren der Einlassöffnung und der Auslassöffnung für den Ansaughub bzw. den Dosierhub des Hub/DrehKolbens ermöglicht.

Vorzugsweise wird für den Antrieb der Hubbewegung des Hub/Dreh-Kolbens ein rotativer Servomotor verwendet, der mit einem Zahnrad drehfest verbunden ist und über eine mit dem Hub/Dreh-Kolben axial starr und in Drehrichtung verdrehbar verbundene Zahnstange die axiale Hubbewegung des Hub/Dreh-Kolbens bzw. des Kolbens erzeugt. Vorzugsweise wird dann für den Antrieb der Drehbewegung des Hub/Dreh-Kolbens ein linearer Pneumatikzylinder verwendet, der mit einer Zahnstange starr verbunden ist, die mit einem mit dem Hub/Dreh-Kolben drehfest verbundenen Zahnrad kämmt. Es können alle Hub/Dreh-Kolben gemeinsam in Hubrichtung bewegt werden, d.h. sie befinden sich in einem Balken, der fest mit einer Zahnstange verbunden ist, die sich auf einer Ritzelwelle abwickelt, die wiederum mit dem rotativen Motor verbunden ist.

Bei einer speziellen Ausführung enthalten die Formgebungseinheiten jeweils eine Düse, durch welche das bestimmte Volumen der Masse befördert wird, und eine der Düse gegenüberliegende Kontaktfläche, welche von dem bestimmten Volumen der Masse kontaktiert wird, wobei die Kontaktfläche z.B. die Innenfläche einer Hohlform sein kann.

Hierbei ist die Kontaktfläche vorzugsweise die obere Fläche eines Formentisches, der entlang dreier linear unabhängiger Richtungen durch einen jeweiligen linearen Servo-Antrieb verfahrbar ist.

Wenn die Düse über eine flexible Fluidleitung (für den Transport der Lebensmittelmasse) mit der Auslassöffnung der Dosiereinheit verbunden ist, kann auch sie alternativ oder ergänzend zur Verfahrbarkeit des Formentisches entlang dreier linear unabhängiger Richtungen durch einen jeweiligen linearen Servo-Antrieb verfahrbar sein.

Die Düse kann aber auch mit der Auslassöffnung fest verbunden sein. In diesem Fall ist die Düse und mit ihr die gesamte Kolben/Ventil-Einheit entlang dreier unabhängiger Richtungen räumlich bewegbar.

Besonders vorteilhaft ist, wenn der Hub/Dreh-Kolben ein Zahnrad aufweist und wenn anstelle eines rotativen Servo-Antriebes ein linearer Servo-Antrieb oder ein linearer Pneumatik-Antrieb vorgesehen ist, der eine mit dem Zahnrad kämmende Zahnstange antreibt. Auf diese Weise lassen sich sämtliche Antriebe durch lineare Servo-Antriebe und lineare Pneumatik-Antriebe realisieren, wodurch die Vorrichtung mit weniger verschiedenen Bauteilen auskommt und ihre Wartungsfreundlichkeit erhöht wird. Wenn ein linearer Servomotor verwendet wird, dann wird ggf. überhaupt keine Kombination von Zahnrad/Zahnstang benötigt, da die Hubbewegung linear ist wie auch die Servoantriebs-Bewegung.

Zweckmässigerweise weist die erfindungsgemässe Vorrichtung eine Vielzahl von Hub/- Dreh-Kolben mit einem jeweiligen Zahnrad auf, wobei die über nur einen linearen Servo-Antrieb oder nur einen linearen Pneumatik-Antrieb angetriebene Zahnstange mit mehreren Zahnrädern mehrerer Hub/Dreh-Kolben kämmt. Dadurch lassen sich die Fertigungs- und Betriebskosten der erfindungsgemässen Vorrichtung senken.

Zur Ergänzung des erfindungsgemässen Hygienekonzeptes, das ohne HydraulikAntriebe auskommt und somit eine Verunreinigung des Produktraumes durch Hydraulikflüssigkeit ausschliesst, ist bei der erfindungsgemässen Vorrichtung zwischen dem Antriebsraum und dem Produktraum eine Hygienewand vorgesehen. Dadurch bleiben auch die weiter oben beschriebenen Antriebselemente des Antriebsraums vor Verunreinigungen durch austretendes Produkt (Fettmasse, Schokoladenmasse) geschützt.

Weitere Vorteile, Merkmale und Anwendungsmöglichkeiten der erfindungsgemässen Vorrichtung ergeben sich aus der nun folgenden Beschreibung anhand der Zeichnung, wobei:
- Fig. 1: eine Schnittansicht einer Dosiereinheit des Stands der Technik während der Ansaugphase zeigt;
- Fig. 2: eine Schnittansicht einer Dosiereinheit des Stands der Technik während der Dosierphase zeigt;
- Fig. 3: eine Schnittansicht der erfindungsgemässen Dosiereinheit während der An- saugphase zeigt;
- Fig. 4: eine Schnittansicht der erfndungsgemässen Dosiereinheit während der Do- sierphase zeigt; und
- Fig. 5: eine schematische Perspektivansicht der gesamten erfindungsgemässen Vorrichtung mit der Dosiereinheit ist.

In den Figuren wurden für einander entsprechende Teile unterschiedlicher Anordnungen jeweils dieselben Bezugszeichen verwendet.

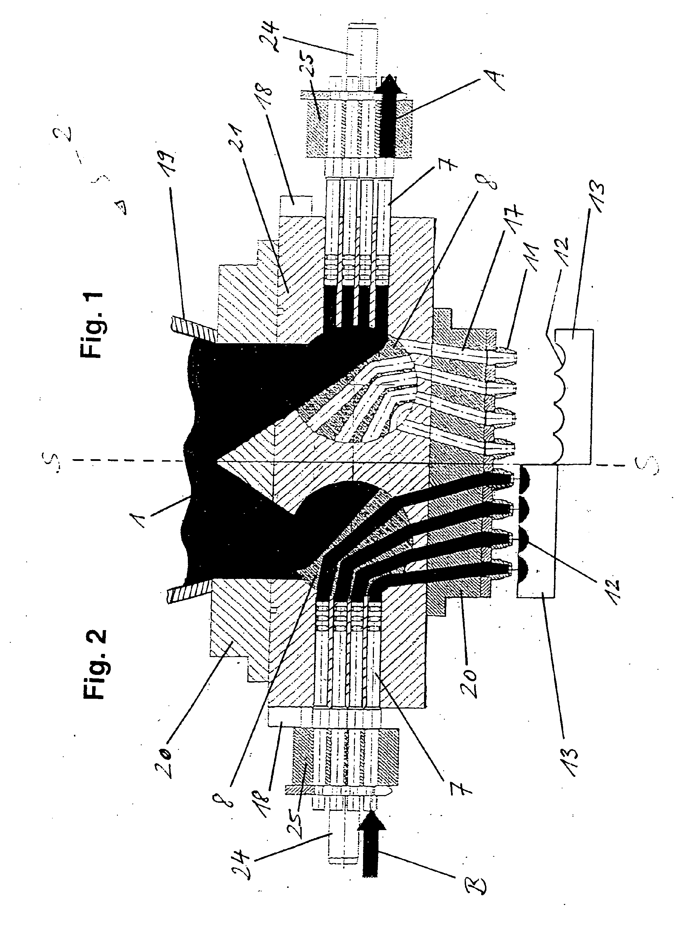

In Fig. 1 und Fig. 2 ist eine symmetrisch aufgebaute Dosiereinheit 2 gemäss dem Stand der Technik gezeigt. Fig. 1 zeigt den rechts von einer Symmetrieebene S liegenden Teil der Dosiereinheit 2 während der Ansaugphase, in der flüssige Schokolade 1 aus einem Trichter 19 angesaugt wird. Fig. 2 zeigt den links von der Symmetrieebene S liegenden Teil der Dosiereinheit 2 während der Dosierphase, in der die zuvor angesaugte flüssige Schokolade 1 in eine Hohlform 13 dosiert wird. Hierfür besteht diese bekannte Dosiereinheit 2 aus einem Gehäuse 20, in dem ein Zylindergehäuse 21 eingebettet ist. Das Zylindergehäuse 21 ist einerseits von mehreren parallelen Hubkolben-Bohrungen durchsetzt, in denen jeweils ein Hubkolben 7 gelagert ist, und andererseits von zwei zu den Hubkolben-Bohrungen rechtwinklig angeordneten parallelen Drehventil-Bohrungen durchsetzt, in denen jeweils ein Drehventil 8 gelagert ist, das von Ventilkanälen durchsetzt ist. In der in Fig. 1 gezeigten Stellung eines solchen Drehventils 8 ist der Trichter 19 mit den Hubkolben-Bohrungen verbunden, wobei die Hubkolben 7 gemäss Pfeil A flüssige Schokolade 1 ansaugen. In der in Fig. 2 gezeigten Stellung eines Drehventils 8 sind die Hubkolben-Bohrungen mit jeweiligen Giesskanälen 17 verbunden, wobei die Hubkolben 7 gemäss Pfeil B flüssige Schokolade 1 über die Giesskanäle 17 und eine am Ende jedes Giesskanals 17 angeordnete Düse 11 jeweils in eine Alveole 12 in einer Hohlform 13 eindosieren. Der Ansaughub A und der Dosierhub B der Hubkolben 7 wird über ein Kupplungsende 24 von einem (nicht gezeigten) Hubkolben-Antrieb vermittelt. Eine Einstellung des Kolbenhubes der Hubkolben 7 erfolgt z.B. über an dem Zylindergehäuse 21 angebrachte Anschläge bzw. Abstandshalter 18, die mit einem mehrere Hubkolben 7 führenden Führungsblock 25 zusammenwirken. Die Drehung der Drehventile 8 wird über einen (ebenfalls nicht gezeigten) Drehkolbenantrieb vermittelt.

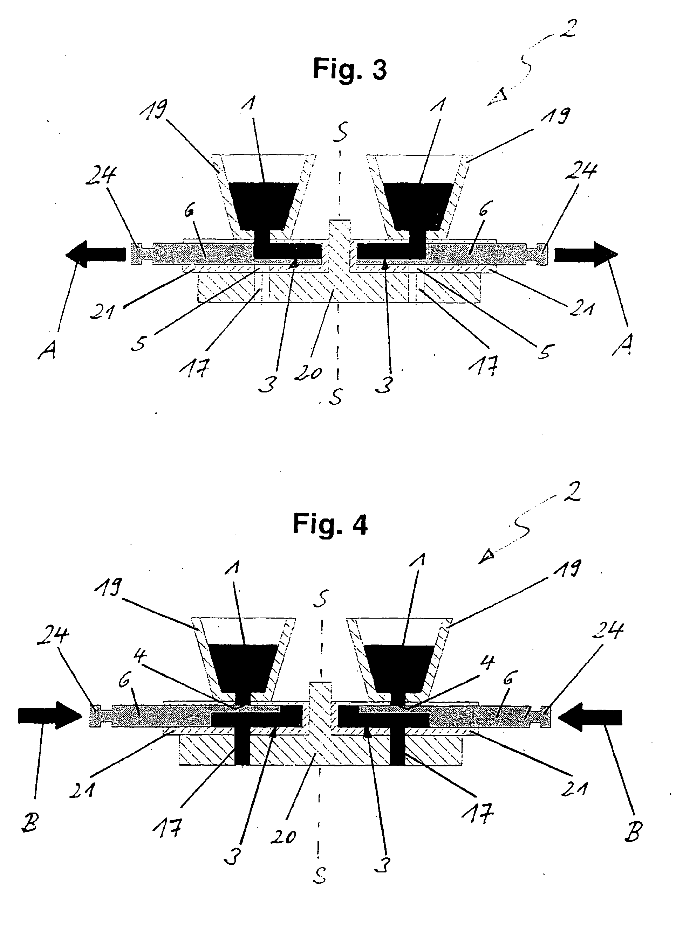

Fig. 3 und Fig. 4 sind eine Schnittansicht einer schematisch dargestellten erfindungsgemässen Dosiereinheit 2 während der Ansaugphase (Pfeil A) bzw. während der Dosierphase (Pfeil B). Die hier gezeigte Ausführung der erfindungsgemässen Dosiereinheit 2 ist ebenfalls zu einer Symmetrieebene S symmetrisch aufgebaut.

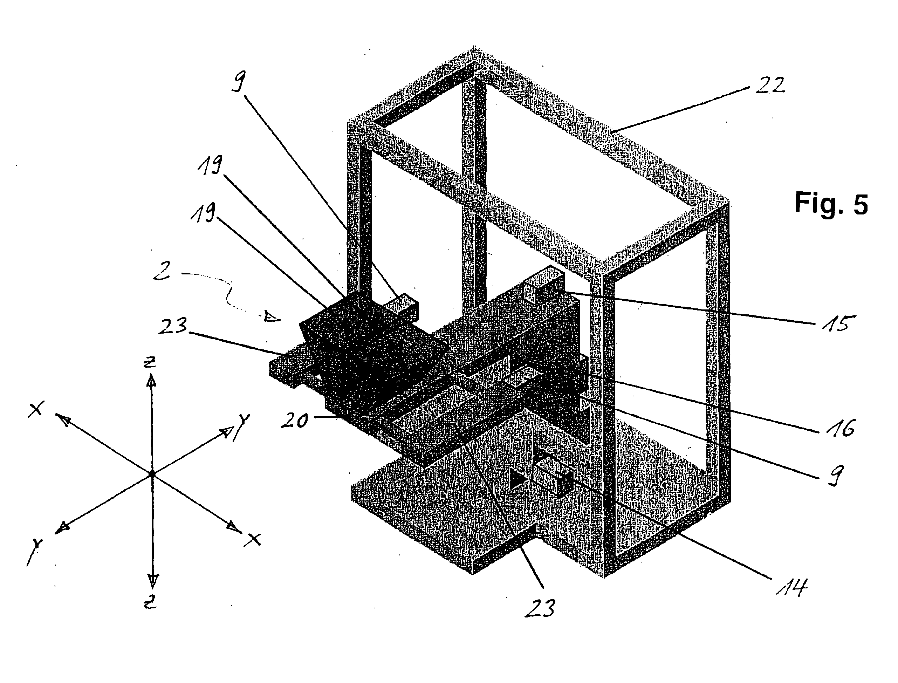

Die Dosiereinheit 2 besteht aus einem Gehäuse 20, mit dem zwei symmetrisch angeordnete Zylindergehäuse 21 verbunden sind. Jedes der beiden Zylindergehäuse 21 besitzt eine Einlassöffnung 4 (siehe Fig. 4), die den zylinderförmigen Innenraum eines Zylindergehäuses 21 mit einem Trichter 19 verbindet, sowie eine Auslassöffnung 5 (siehe Fig. 5), die den zylinderförmigen Innenraum eines Zylindergehäuses 21 über einen Giesskanal 17 mit einer (nicht gezeigten) Düse verbindet. Die Düsen sind dabei ähnlich wie beim Stand der Technik ausgebildet und wirken wie beim Stand der Technik mit einer Hohlform zusammen (siehe Fig. 1 und Fig. 2).

Im zylinderförmigen Innenraum jedes Zylindergehäuses 21 ist ein Hub/Dreh-Kolben 6 gelagert, dessen Grundform zylindrisch ist und der an seinem ersten Kolbenende eine Aussparung aufweist. Durch die Aussparung des Hub/Dreh-Kolbens 6 wird in jedem Zylindergehäuse 21 eine Kammer 3 gebildet. Die Kammer 3 stellt ein Hohlraum-Volumen dar, das durch Verschieben und Verdrehen des Hub/Dreh-Kolbens 6 vergrössert oder verkleinert bzw. verlagert werden kann. An seinem zweiten Kolbenende weist der Hub/Dreh-Kolben 6 ein Kupplungsende 24 auf, über das der Hub/Dreh-Kolben 6 mit Antriebselementen (siehe Fig. 5) verbunden ist. Der Hub/Dreh-Kolben bzw. Kombikolben 6 erfüllt eine Doppelfunktion. Durch axiales Verschieben des Kombikolbens 6 entlang seiner Zylinderachse wird das Volumen der Kammer 3 entweder vergrössert (Pfeil A) oder verkleinert (Pfeil B), so dass eine Ansaugfunktion bzw. eine Dosierfunktion erreicht wird. Durch Verdrehen des Kombikolbens 6 um seine Zylinderachse wird entweder die Einlassöffnung 4 geöffnet und gleichzeitig die Auslassöffnung 5 verschlossen (siehe Fig. 3), oder die Einlassöffnung 4 wird verschlossen und gleichzeitig die Auslassöffnung 5 geöffnet (siehe Fig. 4), so dass eine Ventilfunktion erreicht wird.

Das Verdrehen des Kombikolbens bewirkt dabei keine Änderung des Volumens der Kammer 3, da im vorliegenden Fall die Innenwand jedes Zylindergehäuses 21 die Form eines Kreiszylinders hat, die ausser einer Einlassöffnung 4 und einer dazu diametral gegenüberliegenden Auslassöffnung 5 keine Abweichungen von der Kreiszylinderform oder keine weiteren Vertiefungen aufweist. Somit ist die durch Verschiebung des Kombikolbens 6 vermittelte Ansaug- und Dosierfunktion von der durch die Verdrehung des Kombikolbens 6 vermittelten Ventilfunktion entkoppelt.

Vorzugsweise erfolgt die Verschiebung jedes Kombikolbens 6 über einen Servo-Antrieb 9 (siehe Fig. 5). Dabei kann entweder ein auf den Kombikolben 6 entlang der Pfeile A und B wirkender linearer Servo-Antrieb verwendet werden, oder es kann (wie in Fig. 5 gezeigt) ein rotativer Servo-Antrieb 9 verwendet werden, der über eine Zahnrad/Zahnstangen-Kombination (nicht gezeigt) auf den Kombikolben 6 einwirkt, wobei bei Bedarf noch ein Getriebe als Kraftwandler dazwischengeschaltet werden kann. Die Verwendung eines Servo-Antriebes 9 für die Ansaug- und Dosierbewegung des Kombikolbens 6 gewährleistet eine hohe Steifigkeit und Dosiergenauigkeit. Ausserdem lassen sich mittels des Servo-Antriebes 9 der zeitliche Verlauf sowohl des Ansaughubes (Pfeil A) als auch des Dosierhubes (Pfeil B) bequem steuern. Für die Verdrehung des Kombikolbens 6 kann ebenfalls ein Servo-Antrieb verwendet werden. Allerdings reicht es auch aus, wenn die Verdrehung für das Öffnen und das Schliessen der Einlassöffnung 4 und der Auslassöffnung 5 über einen relativ einfachen pneumatischen Antrieb erfolgt, da - anders als bei der Dosierfunktion - für die Ventilfunktion des Kombikolbens 6 keine hohe Steifigkeit des Antriebs benötigt wird.

Ein gesamter Bewegungszyklus des Kombikolbens 6 der erfindungsgemässen Dosiereinheit 2 besteht aus vier aufeinanderfolgenden Teilbewegungen.

In einem Ansaughub bewegt der Servo-Antrieb (Fig. 5) den Kombikolben 6 aus der in Fig. 3 gezeigten Ausgangsstellung bei offener Einlassöffnung 4 und geschlossener Auslassöffnung 5 über eine vorbestimmte, das Dosiervolumen bestimmende Wegstrecke gemäss dem Pfeil A aus dem Zylindergehäuse 21 heraus. Dabei wird aus dem Trichter 19 flüssige Masse 1 in das sich vergrössernde Volumen der Kammer 3 gesaugt.

In einer ersten Ventil-Umschaltung, die nach Vollendung dieses Ansaughubes erfolgt, wird der Kombikolben 6 um 180° um seine Längsachse verdreht, wodurch die Einlassöffnung 4 durch den Kombikolben 6 geschlossen wird und die Auslassöffnung 5 durch den Kombikolben 6 geöffnet wird. Das nun vorliegende maximale Volumen der Kammer 3 bleibt dabei unverändert. Die Position der Kammer 3 wird durch die Drehbewegung lediglich verlagert. Der Kombikolben 6 befindet sich dann in der in Fig. 4 gezeigten Stellung. Nicht in allen Varianten ist die Kolbendrehung 180°. Es kann auch bei doppelreihigen System ein geringerer Drehwinkel vorliegen.

In einem Dosierhub bewegt der Servo-Antrieb (Fig. 5) den Kombikolben 6 aus der in Fig. 4 gezeigten Ausgangsstellung bei geschlossener Einlassöffnung 4 und geöffneter Auslassöffnung 5 über die vorbestimmte, das Dosiervolumen bestimmende Wegstrecke gemäss dem Pfeil B in das Zylindergehäuse 21 hinein. Dabei wird aus dem sich verkleinernden Volumen der Kammer 3 die flüssige Masse 1 durch den Giesskanal 17 zu der (nicht gezeigten) Düse gepumpt.

In einer zweiten Ventil-Umschaltung, die nach Vollendung dieses Ansaughubes erfolgt, wird der Kombikolben 6 erneut um 180° (auch andere Drehwinkel sind möglich) um seine Längsachse verdreht, wodurch die Einlassöffnung 4 durch den Kombikolben 6 geschlossen wird und die Auslassöffnung 5 durch den Kombikolben 6 geöffnet wird. Das nun vorliegende minimale Volumen der Kammer 3 bleibt dabei wieder unverändert. Nur die Position der Kammer 3 wird verlagert. Der Kombikolben 6 befindet sich dann wieder in der in Fig. 3 gezeigten Stellung.

Der Bewegungszyklus des Kombikolbens 6 kann nun erneut beginnen.

Alternativ können bei der Innenfläche des Zylindergehäuses 21 auch Vertiefungen vorgesehen sein, die sich entlang der Umfangsrichtung an der Innenwand des Zylindergehäuses 21 zwischen der Einlassöffnung 4 und der Auslassöffnung 5 befinden und mit zunehmender Entfernung von der Einlassöffnung 4 und der Auslassöffnung 5 zunehmend tiefer werden, wobei sich die grösste Tiefe z.B. bei einem Winkelabstand von 90° auf halber Umfangsstrecke zwischen der Einlassöffnung 4 und der Auslassöffnung 5 befindet. Dies hat zur Folge, dass auch schon während der Drehbewegung des Kombikolbens 6 bei der weiter oben beschriebenen zweiten Ventil-Umschaltung vor dem linearen Ansaughub ein rotativer Ansaughub erfolgt. Mit anderen Worten findet eine Vergrösserung des Volumens der Kammer 3 nicht erst während der Ansaughub-Bewegung des Kombikolbens 6 statt, sondern auch schon während seiner vorherigen Drehbewegung.

Entsprechend können bei der Innenfläche des Zylindergehäuses 21 auch Vertiefungen vorgesehen sein, die sich entlang der Umfangsrichtung an der Innenwand des Zylindergehäuses zwischen der Einlassöffnung 4 und der Auslassöffnung 5 befinden und mit zunehmender Entfernung von der Einlassöffnung 4 und der Auslassöffnung 5 mend flacher, d.h. weniger tief werden, wobei sich die geringste Tiefe z.B. bei einem Winkelabstand von 90° auf halber Umfangsstrecke zwischen der Einlassöffnung 4 und der Auslassöffnung 5 befindet. Dies hat zur Folge, dass auch schon während der Drehbewegung des Kombikolbens 6 bei der weiter oben beschriebenen ersten Ventil-Umschaltung vor dem linearen Dosierhub ein rotativer Dosierhub erfolgt. Mit anderen Worten findet eine Verkleinerung des Volumens der Kammer 3 nicht erst während der Dosierhub-Bewegung des Kombikolbens 6 statt, sondern ebenfalls schon während seiner vorherigen Drehbewegung.

Die Vertiefungen in der Innenwand des Zylindergehäuses 21 sind strömungstechnisch so ausgebildet, dass sie von er flüssigen Masse 1 vorzugsweise turbulent durchströmt werden, so dass sich kein Totvolumen bildet.

Durch diese alternative Ausgestaltung des Zylindergehäuses 21 kann bei vorgegebener Grösse der erfindungsgemässen Dosiereinheit 2 pro Bewegungszyklus des Kombikolbens 6 ein grössere Dosiermenge erreicht werden, oder es kann bei vorgegebener Dosiermenge eine kompaktere Dosiereinheit 2 und/oder ein kürzerer linearer Hub des Kombikolbens 6 erreicht werden. Ausserdem wird Turbulenz erzeugt, die bei manchen Giess-Anwendungen vorteilhaft ist.

Vorzugsweise werden dann sowohl die lineare als auch die rotative Bewegung des Kombikolbens 6 durch einen elektromechanischen Servo-Antrieb angesteuert.

Fig. 5 ist eine schematische Perspektivansicht der gesamten erfindungsgemässen Vorrichtung samt Dosiereinheit 2. Die Dosiereinheit 2 mit ihren beiden Trichtern 19 und ihrem Gehäuse 20 ist an einem Maschinengestell 22 bewegbar gelagert. In jeweils einem Antriebsgehäuse 23 beiderseits des Gehäuses 20 sind die weiter oben beschriebenen Zahnrad/Zahnstangen-Kombinationen, Getriebe oder Pneumatik-Elemente untergebracht, die von einem jeweiligen rotativen Servo-Antrieb 9 für den Ansaughub und den Dosierhub des Kombikolbens 6 oder von einem jeweiligen (nicht gezeigten) Pneumatik-Antrieb für die erste und die zweite Ventilumschaltung des Kombikolbens 6 angetrieben werden. Ausserdem sind drei lineare Servo-Antriebe 14, 15, 16 vorgesehen, mittels derer die Dosiereinheit 2 samt ihrer (nicht gezeigten) Düsen jeweils entlang der x-Richtung für eine horizontale Querbewegung, entlang der y-Richtung für eine horizontale Längsbewegung und entlang der z-Richtung für eine vertikale Bewegung angetrieben wird. Dadurch lassen sich die Düsen für ein punktuelles Giessen in Alveolen 12 einer Hohlform 13 (siehe Fig. 1 und Fig. 2) ggf. mit anschliessendem Kaltstempeln oder für ein lineares Giessen (Bandgiessen) auf einem Formentisch bewegen.

Alternativ können drei lineare Servo-Antriebe vorgesehen werden, mittels derer ein Formentisch (nicht gezeigt) relativ zu einer in diesem Fall feststehenden Dosiereinheit 2 jeweils entlang der x-Richtung, entlang der y-Richtung und entlang der z-Richtung angetrieben wird.

### Bezugszeichen

- 1: Masse, Schokolade
- 2: Dosiereinheit
- 3: Kammer
- 4: Einlassöffnung
- 5: Auslassöffnung
- 6: Verdrängungskörper, Hub/Dreh-Kolben, Kombikolben
- 4, 6: Einlassventil
- 5, 6: Auslassventil
- 7: Hubkolben
- 8: Drehventil
- 9: rotativer Servo-Antrieb (für Dosiervolumen)
- 10: Kanal (im Hub/Dreh-Kolben)
- 11: Düse
- 12: Kontaktfläche, Alveole
- 13: Hohlform
- 14: linearer Servo-Antrieb (für x-Richtung)
- 15: linearer Servo-Antrieb (für y-Richtung)
- 16: linearer Servo-Antrieb (für z-Richtung)
- 17: Giesskanal
- 18: Anschlag
- 19: Trichter
- 20: Gehäuse
- 21: Zylindergehäuse
- 22: Gestell
- 23: Antriebsgehäuse
- 24: Kupplungsende
- 25: Führungsblock
- A: Pfeil für Ansaugbewegung
- B: Pfeil für Dosierbewegung
- S: Symmetrieebene

## Patentansprüche

1. Vorrichtung zur Verarbeitung eines Verzehrgutes in Form einer viskosen bis pastösen Masse (1), insbesondere eines Verzehrgutes auf Fettmasse-Basis wie Schokolade oder eines Verzehrgutes auf Wasser-Basis wie Eiskrem, mit einer Dosiereinheit (2) zum dosierten Zuführen eines bestimmten Volumens der Masse (1) zu Formgebungseinheiten (13), wobei die Dosiereinheit (2) eine Kammer (3) mit einer verschliessbaren Einlassöffnung (4) und einer verschliessbaren Auslassöffnung (5) für die zu dosierende Masse (1) sowie einen in die Kammer (3) abgedichtet hineinragenden und innerhalb der Kammer (3) beweglichen Verdrängungskörper (6) aufweist, der zwischen einer ersten Stellung, bei der die Auslassöffnung (5) geschlossen und die Einlassöffnung (4) offen ist und das zwischen dem Verdrängungskörper (6) und der Kammer (3) definierte Hohlraum-Volumen seinen grössten Wert hat, und einer zweiten Stellung, bei der die Einlassöffnung (4) geschlossen und die Auslassöffnung (5) offen ist und das zwischen dem Verdrängungskörper (6) und der Kammer (3) definierte Hohlraum-Volumen seinen kleinsten Wert hat, beweglich ist, wobei die Einlassöffnung (4) und die Auslassöffnung (5) über ein Einlassventil (4, 6) bzw. ein Auslassventil (5, 6) verschliessbar ist, **dadurch gekennzeichnet, dass** das Einlassventil (7) und das Auslassventil (8) jeweils durch einen Teilbereich des Verdrängungskörpers gebildet sind, der in der ersten Stellung nur die Auslassöffnung blockiert und in der zweiten Stellung nur die Einlassöffnung blockiert, und dass bei der Vorrichtung die das Dosiervolumen bestimmende Bewegung des Verdrängungskörpers (6) über einen Servo-Antrieb (9) erfolgt und das Schliessen und Öffnen des Einlassventils (7) und des Auslassventils (8) jeweils über einen Pneumatik-Antrieb erfolgt.

2. Vorrichtung nach Anspruch 1, **dadurch gekennzeichnet, dass** der Verdrängungskörper ein Hubkolben (6) ist, der in der Kammer (3) der Dosiereinheit (2) axial gleitend gelagert ist und mittels des Servo-Antriebes (9) in der Kammer (3) zwischen einer ersten Hubstellung, in der das zwischen dem Hubkolben (6) und der Kammer (3) definierte Hohlraum-Volumen seinen grössten Wert hat, und einer zweiten Hubstellung, in der das zwischen dem Hubkolben (6) und der Kammer (3) definierte Hohlraum-Volumen seinen kleinsten Wert hat, hin und her bewegbar ist.

3. Vorrichtung nach Anspruch 1 oder 2, **dadurch gekennzeichnet, dass** das Einlassventil (7) und das Auslassventil (8) durch einen mit einem Kanal (10) durchsetzten Drehkolben (6) gebildet ist, der in der Kammer (3) der Dosiereinheit drehbar gelagert und mittels eines Antriebes zwischen einer ersten Drehstellung und einer zweiten Drehstellung hin und her bewegbar ist, wobei der Kanal (10) in der ersten Drehstellung des Drehkolbens (6) eine Verbindung zwischen dem Hohlraum-Volumen und der Einlassöffnung (4) herstellt und in der zweiten Drehstellung des Drehkolbens (6) eine Verbindung zwischen dem Hohlraum-Volumen und der Auslassöffnung (5) herstellt.

4. Vorrichtung nach Anspruch 1, **dadurch gekennzeichnet, dass** der Verdrängungskörper ein Hub/Dreh-Kolben (6) ist, der in der Kammer (3) axial gleitend und um seine Längsachse drehbar gelagert ist, wobei die erste Stellung des Hub/DrehKolbens (6) eine erste Hubstellung und eine erste Drehstellung des Hub/DrehKolbens ist und die zweite Stellung des Hub/Dreh-Kolbens (6) eine zweite Hubstellung und eine zweite Drehstellung des Hub/Dreh-Kolbens ist.

5. Vorrichtung nach Anspruch 4, **dadurch gekennzeichnet, dass** die axiale Hubbewegung des Hub/Dreh-Kolbens (6) über einen linearen oder einen rotativen Servo-Antrieb (9) bewirkt wird und die Drehbewegung des Hub/Dreh-Kolbens (6) über einen linearen oder einen rotativen Pneumatik-Antrieb bewirkt wird.

6. Vorrichtung nach Anspruch 5, **dadurch gekennzeichnet, dass** für den Antrieb der Hubbewegung des Hub/Dreh-Kolbens (6) ein rotativer Servomotor (9) verwendet wird, der mit einem Zahnrad drehfest verbunden ist und über eine mit dem Hub/Dreh-Kolben (6) axial starr und in Drehrichtung verdrehbar verbundene Zahnstange die axiale Hubbewegung des Hub/Dreh-Kolbens erzeugt.

7. Vorrichtung nach Anspruch 6, **dadurch gekennzeichnet, dass** für den Antrieb der Drehbewegung des Hub/Dreh-Kolbens ein linearer Pneumatikzylinder verwendet wird, der mit einer Zahnstange starr verbunden ist, die mit einem mit dem Hub/Dreh-Kolben drehfest verbundenen Zahnrad kämmt.

8. Vorrichtung nach einem der Ansprüche 1 bis 7, **dadurch gekennzeichnet, dass** die Formgebungseinheiten jeweils eine Düse (11), durch welche das bestimmte Volumen der Masse (1) befördert wird, und eine der Düse (11) gegen überliegende Kontaktfläche (12), welche von dem bestimmten Volumen der Masse (1) kontaktiert wird, aufweisen.

9. Vorrichtung nach Anspruch 8, **dadurch gekennzeichnet, dass** die Kontaktfläche (12) die Innenfläche einer Hohlform (13) ist.

10. Vorrichtung nach Anspruch 8 oder 9, **dadurch gekennzeichnet, dass** die Kontaktfläche (12) die obere Fläche eines Formentisches ist, der entlang linear unabhängiger Richtungen (x, y, z) durch einen jeweiligen linearen Servo-Antrieb verfahrbar ist.

11. Vorrichtung nach einem der Ansprüche 8 bis 10, **dadurch gekennzeichnet, dass** die Düse (11) über eine flexible Fluidleitung mit der Auslassöffnung (5) der Dosiereinheit (2) verbunden ist und entlang linear unabhängiger Richtungen (x, y, z) durch einen jeweiligen linearen Servo-Antrieb (14, 15, 16) verfahrbar ist.

12. Vorrichtung nach einem der Ansprüche 1 bis 6, **dadurch gekennzeichnet, dass** der Hub/Dreh-Kolben (6) ein Zahnrad aufweist, und dass ein linearer Servo-Antrieb vorgesehen ist, der eine mit dem Zahnrad kämmende Zahnstange antreibt.

13. Vorrichtung nach Anspruch 12, **dadurch gekennzeichnet, dass** sie eine Vielzahl von Hub/Dreh-Kolben mit einem jeweiligen Zahnrad aufweist, wobei die über den linearen Servo-Antrieb angetriebene Zahnstange mit mehreren Zahnrädern mehrerer Hub/Dreh-Kolben kämmt.

14. Vorrichtung nach einem der vorhergehenden Ansprüche, **dadurch gekennzeichnet, dass** zwischen dem Antriebsraum und dem Produktraum eine Hygienewand vorgesehen ist.

## Claims

1. Device for processing an edible product in the form of a viscous to pasty substance (1), in particular an edible product based on a fatty substance such as chocolate or a water-based edible product such as ice cream, having a metering unit (2) for supplying a particular volume of the substance (1) in a metered manner to shaping units (13), wherein the metering unit (2) has a chamber (3) having a closable inlet opening (4) and a closable outlet opening (5) for the substance (1) to be metered, and also a displacement body (6) which protrudes in a sealed manner into the chamber (3), can move within the chamber (3) and can move between a first position, in which the outlet opening (5) is closed and the inlet opening (4) is open and the cavity volume defined between the displacement body (6) and the chamber (3) is at its greatest, and a second position, in which the inlet opening (4) is closed and the outlet opening (5) is open and the cavity volume defined between the displacement body (6) and the chamber (3) is at its smallest, wherein the inlet opening (4) and the outlet opening (5) can be closed via an inlet valve (4, 6) and an outlet valve (5, 6), respectively, **characterized in that** the inlet valve (7) and the outlet valve (8) are formed in each case by a region of the displacement body, which in the first position blocks only the outlet opening and in the second position blocks only the inlet opening, and **in that**, in the device, that movement of the displacement body (6) that determines the metering volume takes place via a servo drive (9) and the inlet valve (7) and the outlet valve (8) are closed and opened in each case via a pneumatic drive.

2. Device according to Claim 1, **characterized in that** the displacement body is a reciprocating piston (6) which is mounted such that it can slide axially in the chamber (3) of the metering unit (2), and by means of the servo drive (9) can move back and forth in the chamber (3) between a first stroke position, in which the cavity volume defined between the reciprocating piston (6) and the chamber (3) is at its greatest, and a second stroke position, in which the cavity volume defined between the reciprocating piston (6) and the chamber (3) is at its smallest.

3. Device according to Claim 1 or 2, **characterized in that** the inlet valve (7) and the outlet valve (8) are formed by a rotary piston (6) through which a channel (10) passes, said rotary piston (6) being mounted such that it can rotate in the chamber (3) of the metering unit and being able to move back and forth between a first rotary position and a second rotary position by means of a drive, wherein the channel (10) produces a connection between the cavity volume and the inlet opening (4) in the first rotary position of the rotary piston (6) and produces a connection between the cavity volume and the outlet opening (5) in the second rotary position of the rotary piston (6).

4. Device according to Claim 1, **characterized in that** the displacement body is a reciprocating/rotary piston (6) which is mounted such that it can slide axially and can rotate about its longitudinal axis in the chamber (3), wherein the first position of the reciprocating/rotary piston (6) is a first stroke position and a first rotary position of the reciprocating/rotary piston and the second position of the reciprocating/rotary piston (6) is a second stroke position and a second rotary position of the reciprocating/rotary piston.

5. Device according to Claim 4, **characterized in that** the axial reciprocating movement of the reciprocating/rotary piston (6) is effected via a linear or rotary servo drive (9) and the rotary movement of the reciprocating/rotary piston (6) is effected via a linear or rotary pneumatic drive.

6. Device according to Claim 5, **characterized in that** a rotary servo motor (9) is used for the drive of the reciprocating movement of the reciprocating/rotary piston (6), said rotary servo motor (9) being connected in a rotationally fixed manner to a gearwheel and producing the axial reciprocating movement of the reciprocating/rotary piston via a rack which is connected to the reciprocating/rotary piston (6) such that it is axially rigid and can rotate in the rotational direction.

7. Device according to Claim 6, **characterized in that** a linear pneumatic cylinder is used for the drive of the rotary movement of the reciprocating/rotary piston, said linear pneumatic cylinder being connected rigidly to a rack which meshes with a gearwheel connected in a rotationally fixed manner to the reciprocating/rotary piston.

8. Device according to one of Claims 1 to 7, **characterized in that** the forming units each have a nozzle (11), through which the particular volume of substance (1) is conveyed, and, opposite the nozzle (11), a contact surface (12) which is contacted by the particular volume of substance (1).

9. Device according to Claim 8, **characterized in that** the contact surface (12) is the inner surface of a hollow mould (13).

10. Device according to Claim 8 or 9, **characterized in that** the contact surface (12) is the top surface of a moulding table which can be moved in linearly independent directions (x, y, z) by a respective linear servo drive.

11. Device according to one of Claims 8 to 10, **characterized in that** the nozzle (11) is connected via a flexible fluid line to the outlet opening (5) of the metering unit (2) and can be moved in linearly independent directions (x, y, z) by a respective linear servo drive (14, 15, 16).

12. Device according to one of Claims 1 to 6, **characterized in that** the reciprocating/rotary piston (6) has a gearwheel and **in that** there is provided a linear servo drive which drives a rack that meshes with the gearwheel.

13. Device according to Claim 12, **characterized in that** it has a multiplicity of reciprocating/rotary pistons each having a gearwheel, wherein the rack driven via the linear servo drive meshes with a plurality of gearwheels of a plurality of reciprocating/rotary pistons.

14. Device according to one of the preceding claims, **characterized in that** a hygiene wall is provided between the drive space and the product space.

## Revendications

1. Dispositif pour traiter un bien de consommation sous la forme d'une masse visqueuse à pâteuse (1), en particulier d'un bien de consommation à base de masse de graisse tel que du chocolat ou d'un bien de consommation à base d'eau tel que la crème glacée, doté d'une unité de dosage (2) pour l'arrivée dosée d'un volume défini de la masse (1) à des unités de formage (13), l'unité de dosage (2) présentant une chambre (3) avec une ouverture d'entrée (4) pouvant être fermée et une ouverture de sortie (5) pouvant être fermée pour la masse (1) à doser et un corps de refoulement (6) dépassant de façon étanche dans la chambre (3) et mobile à l'intérieur de la chambre (3), lequel corps est mobile entre une première position, dans laquelle l'ouverture de sortie (5) est fermée et l'ouverture d'entrée (4) est ouverte et le volume de cavité défini entre le corps de refoulement (6) et la chambre (3) présente sa valeur maximale, et une seconde position, dans laquelle l'ouverture d'entrée (4) est fermée et l'ouverture de sortie (5) est ouverte et le volume de cavité défini entre le corps de refoulement (6) et la chambre (3) présente sa valeur minimale, l'ouverture d'entrée (4) et l'ouverture de sortie (5) pouvant être fermées au moyen d'une vanne d'entrée (4, 6) et/ou d'une vanne de sortie (5, 6), **caractérisé en ce que** la vanne d'entrée (7) et la vanne de sortie (8) sont formées respectivement par une zone partielle du corps de refoulement, lequel bloque dans la première position uniquement l'ouverture de sortie et dans la seconde position uniquement l'ouverture d'entrée, et **en ce que**, sur le dispositif, le déplacement, déterminant le volume de dosage, du corps de refoulement (6) s'effectue au moyen d'une servocommande (9) et la fermeture et l'ouverture de la vanne d'entrée (7) et de la vanne de sortie (8) s'effectuent respectivement au moyen d'un entraînement pneumatique.

2. Dispositif selon la revendication 1, **caractérisé en ce que** le corps de refoulement est un piston élévateur (6) qui est monté dans la chambre (3) de l'unité de dosage (2) de façon coulissante axialement et peut être déplacé d'un côté et de l'autre au moyen de la servocommande (9) dans la chambre (3) entre une première position de levage, dans laquelle le volume de cavité défini entre le piston élévateur (6) et la chambre (3) présente sa valeur maximale, et une seconde position de levage, dans laquelle le volume de cavité défini entre le piston élévateur (6) et la chambre (3) présente sa valeur minimale.

3. Dispositif selon la revendication 1 ou 2, **caractérisé en ce que** la vanne d'entrée (7) et la vanne de sortie (8) sont formées par un piston rotatif (6) traversé par un canal (10), lequel piston est monté de façon rotative dans la chambre (3) de l'unité de dosage et peut être déplacé d'un côté et de l'autre au moyen d'un entraînement entre une première position de rotation et une seconde position de rotation, le canal (10) établissant, dans la première position de rotation du piston rotatif (6), une liaison entre le volume de cavité et l'ouverture d'entrée (4) et, dans la seconde position du piston rotatif (6), une liaison entre le volume de cavité et l'ouverture de sortie (5).

4. Dispositif selon la revendication 1, **caractérisé en ce que** le corps de refoulement est un piston élévateur/rotatif (6), qui est monté dans la chambre (3) de façon coulissante axialement et de façon à pouvoir tourner autour de son axe longitudinal, la première position du piston élévateur/rotatif (6) étant une première position de levage et une première position de rotation du piston élévateur/rotatif et la seconde position du piston élévateur/rotatif (6) est une seconde position de levage et une seconde position de rotation du piston élévateur/rotatif.

5. Dispositif selon la revendication 4, **caractérisé en ce que** le mouvement de levage axial du piston élévateur/rotatif (6) est effectué au moyen d'une servocommande (9) linéaire ou d'une servocommande (9) rotative et le mouvement de rotation du piston élévateur/rotatif (6) est effectué au moyen d'un entraînement pneumatique linéaire ou d'un entraînement pneumatique rotatif.

6. Dispositif selon la revendication 5, **caractérisé en ce qu'**un servomoteur (9) rotatif est utilisé pour l'entraînement du mouvement de levage du piston élévateur/rotatif (6), lequel servomoteur est relié de façon solidaire en rotation à une roue crantée et génère le mouvement de levage axial du piston élévateur/rotatif par l'intermédiaire d'une crémaillère reliée axialement de façon rigide au piston élévateur/rotatif (6) et reliée de façon à pouvoir tourner dans le sens de rotation.

7. Dispositif selon la revendication 6, **caractérisé en ce qu'**un vérin pneumatique linéaire est utilisé pour l'entraînement du mouvement de rotation du piston élévateur/rotatif, lequel vérin est relié de façon rigide à une crémaillère qui s'engrène avec une roue crantée reliée de façon solidaire en rotation au piston élévateur/rotatif.

8. Dispositif selon l'une quelconque des revendications 1 à 7, **caractérisé en ce que** les unités de formage présentent chacune une buse (11), par laquelle le volume défini de la masse (1) est transporté, et une surface de contact (12) faisant face à la buse (11), qui est mise en contact par le volume défini de la masse (1).

9. Dispositif selon la revendication 8, **caractérisé en ce que** la surface de contact (12) est la surface intérieure d'un moule creux (13).

10. Dispositif selon la revendication 8 ou 9, **caractérisé en ce que** la surface de contact (12) est la surface supérieure d'une table de moules, qui peut être déplacée le long de directions (x, y, z) linéairement indépendantes par une servocommande linéaire respective.

11. Dispositif selon l'une quelconque des revendications 8 à 10, **caractérisé en ce que** la buse (11) est reliée par une conduite de fluide flexible à l'ouverture de sortie (5) de l'unité de dosage (2) et peut être déplacée le long de directions (x, y, z) indépendantes linéairement par une servocommande (14, 15, 16) linéaire respective.

12. Dispositif selon l'une quelconque des revendications 1 à 6, **caractérisé en ce que** le piston élévateur/rotatif (6) présente une roue crantée et **en ce qu'**il est prévu une servocommande linéaire qui entraîne une crémaillère venant s'engager avec la roue crantée.

13. Dispositif selon la revendication 12, **caractérisé en ce qu'**il présente une pluralité de pistons élévateurs/rotatifs avec une roue crantée respective, la crémaillère entraînée par la servocommande linéaire venant s'engager avec plusieurs roues crantées de plusieurs pistons élévateurs/rotatifs.

14. Dispositif selon l'une quelconque des revendications précédentes, **caractérisé en ce qu'**une paroi d'hygiène est prévue entre l'espace d'entraînement et l'espace de produit.
